# EUROPÄISCHE PATENTSCHRIFT

(11) **EP 2 274 181 B1**
(45) Veröffentlichungstag und Bekanntmachung des Hinweises auf die Patenterteilung: **19.06.2013**
(21) Anmeldenummer: 08874175.6
(22) Anmeldetag: 19.11.2008
(51) Int. Cl.: B60Q 1/08, B60Q 1/30

(54) **VORRICHTUNG UND VERFAHREN ZUM AUTOMATISCHEN EINSTELLEN DER LEUCHTDICHTE EINES VON EINER BELEUCHTUNGSEINRICHTUNG EINES FAHRZEUGES AUSGESANDTEN LICHTBÜNDELS IN ABHÄNGIGKEIT VON DER SICHTWEITE**
DEVICE AND METHOD FOR AUTOMATICALLY ADJUSTING THE LUMINANCE OF A LIGHT BEAM ISSUED FROM AN ILLUMINATING DEVICE OF A VEHICLE AS A FUNCTION OF THE VISIBILITY
DISPOSITIF ET PROCÉDÉ DE RÉGLAGE AUTOMATIQUE DE LA LUMINANCE D'UN FAISCEAU LUMINEUX ÉMIS PAR L'ÉQUIPEMENT D'ÉCLAIRAGE D'UN VÉHICULE, EN FONCTION DE LA DISTANCE DE VISIBILITÉ

(30) Priorität: 05.05.2008 DE 102008001551
(43) Veröffentlichungstag der Anmeldung: 19.01.2011
(73) Patentinhaber: Robert Bosch GmbH, 70442 Stuttgart (DE)
(72) Erfinder: NIEMZ, Volker, 71229 Leonberg (DE)
(86) Internationale Anmeldenummer: PCT/EP2008/065790
(87) Internationale Veröffentlichungsnummer: WO 2009/135540

(56) Entgegenhaltungen:
- EP-A- 1 422 663
- EP-A- 1 604 865
- DE-A1- 10 205 184
- DE-A1-102006 011 169
- US-A1- 2005 275 562

## Beschreibung

### STAND DER TECHNIK

Die vorliegende Erfindung betrifft ein eine Vorrichtung und ein Verfahren zum automatischen Einstellen der Leuchtdichte eines von einer Beleuchtungseinrichtung eines Fahrzeuges ausgesandten Lichtbündels in Abhängigkeit von der Sichtweite.

Jährlich steigt die Verkehrsdichte auf den weltweiten Straßennetzen stark an. Besonders betroffen sind dabei die Autobahnen und Schnellstraßen. Vor allem bei schlechtem Wetter wird dem Fahrer die volle Aufmerksamkeit abverlangt, um sich im Verkehr zu orientieren. Dabei stellt besonders das Erkennen anderer Verkehrsteilnehmer im Fall von Nebel oder hoher Luftfeuchtigkeit ein großes Problem dar. In diesem Fall sind die übrigen Verkehrsteilnehmer oft nur mittels der vorhandenen Scheinwerfer erkennbar. Besonders der bei Nässe entstehende Sprühnebel lässt die Fahrzeugkonturen der vorausfahrenden sowie der nachkommenden Fahrzeuge verschwimmen, und die Sichtbarkeit kann trotz aktivierter Scheinwerfer stark absinken. Aktuelle Entwicklungen ermöglichen das automatische Einschalten der Scheinwerfer in Abhängigkeit der geltenden Licht- und Wetterverhältnisse.

Aus der DE 102 05 184 A1 ist eine Einrichtung zu automatischen Einstellung der Leuchtdichte des von wenigstens einer rückwärtigen Beleuchtungseinrichtung eines Fahrzeugs ausgesandten Lichtbündels in Abhängigkeit von der Helligkeit und der Sichtweite in der Umgebung des Fahrzeugs bekannt, welche eine Sensoreinrichtung zum Ermitteln der Helligkeit und der Sichtweite in der Umgebung des Fahrzeugs aufweist.

Aus der EP-A-1 604 865 ist eine Beleuchtungseinrichtung für ein Fahrzeug bekannt. Eine Intensität einer Lichtemission einer Lichtquelle der Beleuchtungseinrichtung kann mittels eines Sichtweitensensors und eines Schmutzsensors eingestellt werden.

Aus der US 2005/275562 A1 ist ein Fahrzeug-Beleuchtungssystem zum Beleuchten eines vor einem Fahrzeug liegenden Bereichs bekannt. Das Fahrzeug-Beleuchtungssystem ist mit einer Vielzahl von Lichtquellen versehen, die jeweils dazu geeignet sind, einen anderen Beleuchtungsbereich zu beleuchten. Einer Steuereinheit ist zum Bestimmen einer Verkehrsszene und zum Ändern der Ausrichtungen oder Lichtmengen der Vielzahl von Lichtquellen vorgesehen.

### VORTEILE DER ERFINDUNG

Die erfindungsgemäße Vorrichtung zum automatischen Einstellen der Leuchtdichte eines von einer Beleuchtungseinrichtung eines Fahrzeuges ausgesandten Lichtbündels in Abhängigkeit von der Sichtweite gemäß Anspruch 1 und das entsprechende Verfahren gemäß Anspruch 5 weisen den Vorteil auf, dass durch eine zusätzliche Bewertung der Sichtweite die Sicherheit weiter verbessert werden kann, da die Sichtbarkeit des eigenen Fahrzeugs bzw. fremder Fahrzeuge situationsbedingt gesteigert wird.

Die der vorliegenden Erfindung zugrundeliegende Idee besteht darin, die Fahrzeugbeleuchtung in Abhängigkeit der vorherrschenden Licht- und Wetterverhältnisse zu regeln, wobei das ermittelte Sichtvermögen bzw. die ermittelte Sichtweite durch mindestens einen weiteren Parameter bewertet wird. Insbesondere kann der weitere Parameter ein Fahrzeugparameter sein, wie z. B. Konstruktion der Fahrzeugkarosserie, aktuelle Geschwindigkeit, Reifentyp, Profiltiefe der Reifen, Alter der Reifen, o. ä. Ebenfalls kann der weitere Parameter ein Fahrerparameter sein, wie z.B. Alter des Fahrers, Sehvermögen des Fahrers, individuelle Vorgabe des Fahrers usw.

In den Unteransprüchen finden sich vorteilhafte Weiterbildungen und Verbesserungen des Gegenstandes der Erfindung.

### ZEICHNUNGEN

Ausführungsbeispiele der Erfindung sind in den Zeichnungen dargestellt und werden in der nachfolgenden Beschreibung näher erläutert.

Es zeigen:
- Fig. 1: ein schematisches Blockdiagramm eines Fahrzeuges mit einer Vorrichtung zum automatischen Einstellen der Leuchtdichte eines von einer Beleuchtungseinrichtung eines Fahrzeuges ausgesandten Lichtbündels in Abhängigkeit von der Sichtweite gemäß einer ersten Ausführungsform der vorliegenden Erfindung; und
- Fig. 2: ein Fliessdiagramm zum Erläutern des Verfahrens zum automatischen Einstellen der Leuchtdichte eines von einer Beleuchtungseinrichtung eines Fahrzeuges ausgesandten Lichtbündels in Abhängigkeit von der Sichtweite gemäß der ersten Ausführungsform der vorliegenden Erfindung.

### BESCHREIBUNG DER AUSFÜHRUNGSBEISPIELE

In den Figuren bezeichnen gleiche Bezugszeichen gleiche oder funktionsgleiche Komponenten.

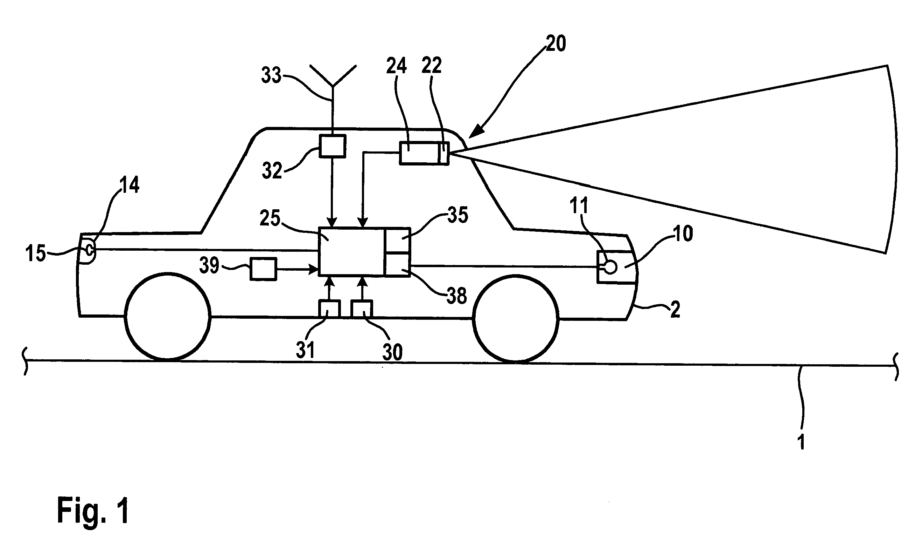

Fig. 1 zeigt ein schematisches Blockdiagramm eines Fahrzeuges mit einer Vorrichtung zum automatischen Einstellen der Leuchtdichte eines von einer Beleuchtungseinrichtung eines Fahrzeuges ausgesandten Lichtbündels in Abhängigkeit von der Sichtweite gemäß einer ersten Ausführungsform der vorliegenden Erfindung.

In Fig. 1 bezeichnet Bezugszeichen 1 eine Fahrbahn, auf der sich ein Fahrzeug 2 befindet. Als Beleuchtungseinrichtungen weist das Fahrzeug 2 im Frontbereich einen Scheinwerfer 10 mit einer Scheinwerferleuchte 11 und im Heckbereich ein Rücklicht 14 mit einer Rückleuchte 15 auf.

Bezugszeichen 25 bezeichnet eine Vorrichtung zum automatischen Einstellen der Leuchtdichte und des vom Scheinwerfer 10 und des vom Rücklicht 14 ausgesandten Lichts. Die Vorrichtung 25 erhält Informationen über die aktuelle Sichtweite von einer Temperaturerfassungseinrichtung 30, von einer Feuchtigkeits-Erfassungseinrichtung 31, von einer Wetterinformations-Empfangseinrichtung 32, welche mit einer Antenne 33 verbunden ist, und von einer Videoeinrichtung 20, welche einen Bildsensor 22 und eine Bildverarbcitungseinrichtung 24 aufweist, wie beispielsweise in der DE 102 05 184 A1 beschrieben.

Aus den Signalen dieser Einrichtungen 30, 31, 32, 20 ermittelt eine in der Einstelleinrichtung 25 vorgesehene Sichtweiten-Ermittlungseinrichtung 35 die aktuelle Sichtweite.

Dabei wird die aktuelle Sichtweite zunächst auf Basis der Außentemperatur, wie durch die Einrichtung 30 ermittelt, und der Außenfeuchtigkeit, wie durch die Einrichtung 31 ermittelt, bestimmt. Durch eine zusätzliche Videobildauswertung durch die Einrichtung 20 sowie Wetterinformationen, welche von der Einrichtung 32 empfangen werden, kann die zunächst generierte Sichtweiten- bzw. Wetterindikation verifiziert und, falls notwendig, korrigiert werden. Dadurch können Szenarien wie Nebel, Regen, Schnee und sonstige Witterungen robust und zuverlässig erfasst werden.

Weiterhin bezeichnet in Fig. 1 Bezugszeichen 38 eine in der Einstellvorrichtung 25 vorgesehene Bewertungseinrichtung zum Bewerten der von der Ermittlungseinrichtung 35 ermittelten jeweiligen aktuellen Sichtweite. Die Bewertung wird dabei vorzugsweise unter Berücksichtigung aufgrund mindestens eines Fahrzeugparameters, wie z. B. Geschwindigkeit, Karosseriekonstruktion, Reifentyp, Profiltiefe, Reifenalter, ..., bzw. Fahrerparameters, wie z.B. Alter des Fahrers, Sehvermögen des Fahrers, individuelle Vorgabe des Fahrers usw., durchgeführt.

Da derartige Parameter von Fahrzeug zu Fahrzeug variieren bzw. sich im Laufe der Zeit in einem bestimmten Fahrzeug ändern, ist eine Eingabeeinrichtung 39 vorgesehen, mittels derer der oder die Fahrzeugparameter bzw. Fahrerparameter entsprechend einer jeweiligen Situation automatisch und/ oder manuell eingegeben werden können.

Beim vorliegenden Ausführungsbeispiel sei angenommen, dass der relevante Fahrzeugparameter die Profiltiefe der Reifen ist. Es ist unmittelbar verständlich, dass neue Reifen mit einer großen Profiltiefe weniger Anforderungen an die Eigensicht bzw. Sichtweite stellen als alte, stark abgefahrene Reifen mit geringer Profiltiefe. Dementsprechend ist bei gleicher Sichtweite für alte abgefahrene Reifen eine stärkere Leuchtdichte erforderlich als für neue Reifen, welche eine hohe Profiltiefe aufweisen.

In einer Variante des Ausführungsbeispieles sei zusätzlich oder alternativ angenommen, dass der relevante Fahrzeugparameter die aktuelle Geschwindigkeit des Fahrzeugs ist. Je größer die aktuelle Geschwindigkeit des Fahrzeugs ist, desto größer ist die Verwirbelung der Straßennässe und damit der dadurch bedingte dichte Sprühnebel. Dementsprechend ist bei gleicher Sichtweite bei höheren Geschwindigkeiten eine stärkere Leuchtdichte erforderlich als bei niedrigeren Geschwindigkeiten. Alternativ oder zusätzlich sei angenommen, dass der relevante Fahrzeugparameter die Konstruktion des Heckbereichs des Fahrzeugs ist. Je nach Konstruktion des Heckbereichs des Fahrzeugs tritt die Verwirbelung der Straßennässe unterschiedlich stark auf.

Nach erfolgter Zuordnung einer erforderlichen Leuchtdichte in Abhängigkeit von der ermittelten aktuellen Sichtweite und von der Bewertung durch die Bewertungseinrichtung 38 stellt dann die Einstelleinrichtung 25 die Leuchtdichte des Scheinwerfers 10 und des Rücklichts 14 ein, wobei diese Einstellung für Scheinwerfer 10 und Rücklicht 14 unabhängig durchgeführt werden kann entsprechend beispielsweise einer Tabelle von im Vorab gespeicherten Daten.

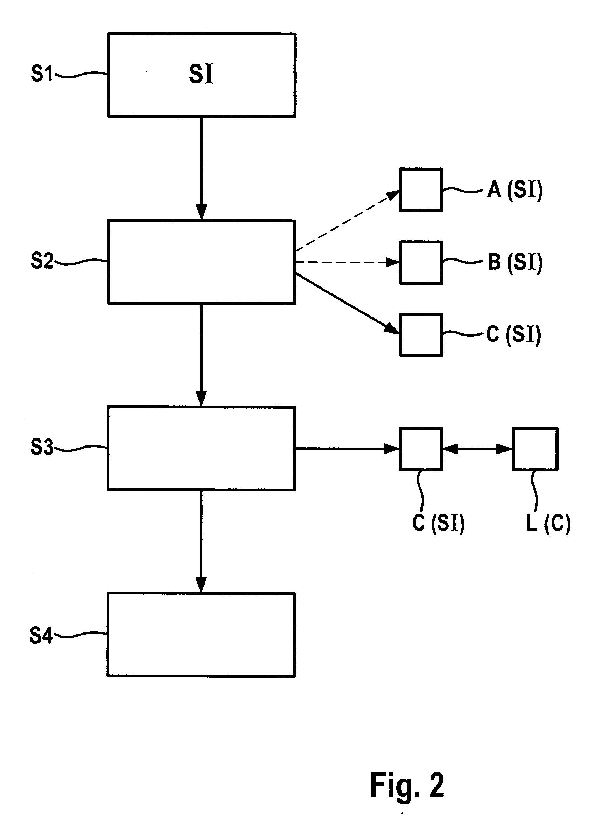

Fig. 2 zeigt ein Fliessdiagramm zum Erläutern des Verfahrens zum automatischen Einstellen der Leuchtdichte eines von einer Beleuchtungseinrichtung eines Fahrzeuges ausgesandten Lichtbündels in Abhängigkeit von der Sichtweite gemäß der ersten Ausführungsform der vorliegenden Erfindung.

In Fig. 2 bezeichnet S 1 einen ersten Schritt des Ermittelns einer aktuellen Sichtweite SI durch die Ermittlungseinrichtung 35 anhand der Parameter der Einrichtungen 30, 31, 32 und 20.

Im Schritt S2 erfolgt dann eine Bewertung der ermittelten aktuellen Sichtweite anhand des Fahrzeugparameters bzw. Fahrerparameters, welcher im vorliegenden Fall die Profiltiefe ist.

Konkret liegt im vorliegenden Fall eine geringe Profiltiefe vor, weshalb der ermittelten aktuellen Sichtweite SI die Bewertungsgröße C (SI) zugeordnet wird. Läge eine mittlere Profiltiefe vor, würde der Wert B (SI) zugeordnet werden, und läge eine hohe Profiltiefe vor, würde der Wert A (SI) zugeordnet werden.

Im Schritt S3 wird dann anhand einer im Voraus gespeicherten Tabelle der Bewertungsgröße C(SI) eine Lichtstärke L(C) zugeordnet, welche als Stellgröße für die Einstelleinrichtung 25 dient, die diese Lichtstärke L(C) im Schritt S4 am Scheinwerfer 10 und/oder dem Rücklicht 14 einstellt.

Für die im Voraus gespeicherten Stellwerte für die Einstelleinrichtung 25 gilt grundsätzlich, dass je schlechter die Sichtverhältnisse bzw. je schlechter der Fahrzeugzustand bzw. je schlechter der Fahrerzustand sind, desto höher die Leuchtintensität anzusetzen ist, um die Eigensichtbarkeit für sich selbst und andere Verkehrsteilnehmer optimal zu gestalten. Im Gegensatz dazu sollte bei guten Sichtverhältnissen bzw. gutem Fahrzeugzustand bzw. gutem Fahrerzustand die Lichtintensität auf ein Mindestmaß reduziert werden.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Insbesondere sind die angegebenen Sensortypen nur beispielhaft, und es können beliebige Sensoren zu Ermittlung der Sichtweite herangezogen werden.

Allgemein sollte erwähnt werden, dass die Witterungsabhängige Lichteinstellung gemäß der vorliegenden Erfindung sowohl auf Basis bereits am Fahrzeug vorhandener Lichtquellen, wie z. B. Scheinwerfer und Rücklichter, durchgeführt werden kann, aber auch mit speziellen Zusatzlichtquellen realisiert werden kann. Somit wäre auch eine gezielte witterungsbedingte bewertete Zuschaltung und Einstellung zusätzlicher Nebelscheinwerfer bzw. anderer Wetterscheinwerfer denkbar.

## Patentansprüche

1. Vorrichtung zum automatischen Einstellen der Leuchtdichte eines von einer Beleuchtungseinrichtung (10,11;14,15) eines Fahrzeuges (2) ausgesandten Lichtbündels in Abhängigkeit von der Sichtweite (SI) mit:
einer Einrichtung (35) zum Ermitteln einer aktuellen Sichtweite (SI) anhand mindestens eines ersten Parameters, welcher ein Maß für die aktuelle Sichtweite (SI) darstellt;
einer Bewertungseinrichtung (38) zum Bewerten der ermittelten aktuellen Sichtweite (SI) anhand mindestens eines zweiten Parameters als Bewertungskriterium und Ausgeben einer entsprechenden Bewertungsgröße; und
einer Einstelleinrichtung (25) zum Zuordnen einer erforderlichen Leuchtdichte in Abhängigkeit von der ermittelten aktuellen Sichtweite (SI) und von der entsprechenden Bewertungsgröße und Einstellen der erforderlichen Leuchtdichte
**dadurch gekennzeichnet, dass** sie
eine Eingabeeinrichtung (39) zum Eingeben mindestens des zweiten Parameters aufweist,
wobei der zweite Parameter ein Fahrzeugparameter ist, der aus folgender Gruppe ausgewählt ist: Konstruktion der Fahrzeugkarosserie, Reifentyp, Profiltiefe der Reifen, Alter der Reifen.

2. Vorrichtung nach einem der vorhergehenden Ansprüche, wobei eine Videoeinrichtung (22, 24) zum Ermitteln des ersten Parameters durch eine Videobildauswertung vorgesehen ist.

3. Vorrichtung nach einem der vorhergehenden Ansprüche, wobei eine Wetterinformations-Empfangseinrichtung (32, 33) zum Ermitteln des ersten Parameters durch eine Wetterinformationsauswertung vorgesehen ist.

4. Vorrichtung nach einem der vorhergehenden Ansprüche, wobei eine TemperaturErfassungseinrichtung und eine Feuchtigkeits-Erfassungseinrichtung (31) zum Ermitteln des ersten Parameters durch eine Temperaturauswertung und durch eine Feuchtigkeitsauswertung vorgesehen ist.

5. Verfahren zum automatischen Einstellen der Leuchtdichte eines von einer Beleuchtungseinrichtung (10, 11; 14, 15) eines Fahrzeuges (2) ausgesandten Lichtbündels in Abhängigkeit von der Sichtweite (SI), um die Sichtbarkeit des eigenen Fahrzeugs zu steigern, mit den Schritten:
Ermitteln (S1) einer aktuellen Sichtweite (S1) anhand mindestens eines ersten Parameters, welcher ein Maß für die aktuelle Sichtweite (SI) darstellt;
Eingeben mindestens eines zweiten Parameters, wobei der zweite Parameter ein Fahrzeugparameter ist, der aus folgender Gruppe ausgewählt ist: Konstruktion der Fahrzeugkarosserie, Reifentyp, Profiltiefe der Reifen, Alter der Reifen;
Bewerten (S2) der ermittelten aktuellen Sichtweite (SI) anhand des mindestens einen zweiten Parameters als Bewertungskriterium und Ausgeben einer entsprechenden Bewertungsgröße; und
Zuordnen (S3) einer erforderlichen Leuchtdichte in Abhängigkeit von der ermittelten aktuellen Sichtweite (SI) und von der entsprechenden Bewertungsgröße und Einstellen (S4) der erforderlichen Leuchtdichte.

## Claims

1. Device for automatically adjusting the luminance of a light beam, emitted by an illuminating device (10, 11; 14 15) of a vehicle (2), as a function of the visual range (SI), having:
a device (35) for determining a current visual range (SI) with the aid of at least a first parameter which constitutes a measure for the current visual range (SI);
an evaluation device (38) for evaluating the determined current visual range (SI) with the aid of at least a second parameter as evaluation criterion, and for outputting a corresponding evaluation quantity; and
an adjusting device (25) for assigning a required luminance as a function of the determined current visual range (SI) and of the corresponding evaluation quantity, and for adjusting the required luminance,
**characterized in that** it has an input device (39) for inputting at least the second parameter, the second parameter being a vehicle parameter which is selected from the following group: design of the vehicle body, tyre type, profile depth of the tyres, age of the tyres.

2. Device according to the preceding claim, in which a video device (22, 24) is provided for determining the first parameter by a video image evaluation.

3. Device according to one of the preceding claims, in which a weather information receiver (32, 33) is provided for determining the first parameter by a weather information evaluation.

4. Device according to one of the preceding claims, in which a temperature detector and a humidity detector (31) are provided for determining the first parameter by a temperature evaluation and by a humidity evaluation.

5. Method for automatically adjusting the luminance of a light beam, emitted by an illuminating device (10, 11; 14, 15) of a vehicle (2), as a function of the visual range (SI) in order to increase the visibility of the driver's own car, having the steps of:
determining (S1) a current visual range (SI) with the aid of at least a first parameter which constitutes a measure for the current visual range (SI);
inputting at least a second parameter, the second parameter being a vehicle parameter which is selected from the following group: design of the vehicle body, tyre type, profile depth of the tyres, age of the tyres;
evaluating (S2) the determined current visual range (SI) with the aid of at least a second parameter as evaluation criterion, and outputting a corresponding evaluation quantity; and
assigning (S3) a required luminance as a function of the determined current visual range (SI) and of the corresponding evaluation quantity, and adjusting (S4) the required luminance.

## Revendications

1. Ensemble de réglage automatique de l'intensité lumineuse d'un faisceau lumineux émis par un dispositif d'éclairage (10, 11; 14, 15) d'un véhicule (2) en fonction de la portée de visibilité (SI), l'ensemble comportant :
un dispositif (35) de détermination de la portée de visibilité (SI) effective à l'aide d'au moins un premier paramètre qui constitue une mesure de la portée de visibilité (SI) effective,
un dispositif d'évaluation (38) qui évalue à l'aide d'au moins un deuxième paramètre utilisé comme critère d'évaluation la portée de visibilité (SI) effective qui a été déterminée et qui délivre une grandeur d'évaluation correspondante et
un dispositif de réglage (25) qui associe l'intensité lumineuse nécessaire en fonction de la portée de visibilité (SI) effective qui a été déterminée et de la grandeur d'évaluation correspondante et qui règle l'intensité lumineuse nécessaire,
**caractérisé en ce que**
l'ensemble présente un dispositif de sortie (39) qui délivre au moins le deuxième paramètre, le deuxième paramètre étant un paramètre du véhicule sélectionné dans l'ensemble suivant :
structure du châssis du véhicule, type de bandages de roue, profondeur du profil des bandages de roue et âge des bandages de roue.

2. Ensemble selon la revendication précédente, dans lequel un dispositif vidéo (22, 24) est prévu pour déterminer le premier paramètre par évaluation d'une image vidéo.

3. Ensemble selon l'une des revendications précédentes, dans lequel un dispositif (32, 33) de réception d'informations météorologiques est prévu pour déterminer le premier paramètre par évaluation des informations météorologiques.

4. Ensemble selon l'une des revendications précédentes, dans lequel un dispositif de saisie de température et un dispositif (31) de saisie de l'humidité sont prévus pour déterminer le premier paramètre par évaluation de la température et par évaluation de l'humidité.

5. Procédé de réglage automatique de l'intensité lumineuse d'un faisceau lumineux émis par un dispositif d'éclairage (10, 11; 14, 15) d'un véhicule (2) en fonction de la portée de visibilité (SI) pour augmenter la portée de visibilité du véhicule propre, le procédé comportant les étapes qui consistent à :
déterminer (S1) une portée de visibilité (SI) effective à l'aide d'au moins un premier paramètre qui constitue une mesure de la portée de visibilité (SI) effective,
introduire au moins un deuxième paramètre, le deuxième paramètre étant un paramètre du véhicule sélectionné dans l'ensemble suivant:
structure du châssis du véhicule, type de bandages de roue, profondeur du profil des bandages de roue et âge des bandages de roue,
évaluer (S2) à l'aide d'au moins un deuxième paramètre qui sert de critère d'évaluation la portée de visibilité (SI) effective qui a été déterminée et délivrer une valeur d'évaluation correspondante et
associer (S3) l'intensité lumineuse nécessaire en fonction de la portée de visibilité (SI) effective qui a été déterminée et de la grandeur d'évaluation correspondante et régler (S4) l'intensité lumineuse nécessaire.
